# EUROPÄISCHE PATENTSCHRIFT

(11) **EP 0 826 190 B1**
(45) Veröffentlichungstag und Bekanntmachung des Hinweises auf die Patenterteilung: **30.09.1998**
(21) Anmeldenummer: 96904721.6
(22) Anmeldetag: 29.02.1996
(51) Int. Cl.: G06K 19/077

(54) **KONTAKTLOSE CHIPKARTE**
CONTACTLESS SMART CARD
CARTE A PUCE SANS CONTACT

(30) Priorität: 03.05.1995 DE 19516227
(43) Veröffentlichungstag der Anmeldung: 04.03.1998
(73) Patentinhaber: SIEMENS AKTIENGESELLSCHAFT, 80333 München (DE)
(72) Erfinder: REINER, Robert, D-82008 Unterhaching (DE)
(86) Internationale Anmeldenummer: DE9600359
(87) Internationale Veröffentlichungsnummer: WO9635190

(56) Entgegenhaltungen:
- EP-A- 0 505 905
- DE-C- 3 721 822
- NL-A- 9 100 176
- NL-A- 9 100 347

## Beschreibung

Chipkarten, das heißt also Plastikkarten, die einen Halbleiterchip beinhalten, werden heute in den meisten Fällen kontaktbehaftet ausgeführt. Die Chipkarte muß dann zum Gebrauch in ein Lesegerät eingeführt werden, das einen ohmschen Kontakt zur Kommunikation zwischen einem Terminal und der Karte herstellt.

Es sind aber auch schon kontaktlose Chipkarten bekannt geworden und werden auch bereits eingesetzt. Bei diesen findet ein Kontakt mit einem Terminal über eine kapazitive oder induktive Kopplung, das heißt also über den elektrischen oder magnetischen Anteil eines elektromagnetischen Feldes statt. Vorzugsweise wird hierbei die induktive Kopplung verwendet.

Bei einer induktiven Kopplung ist ein bestimmter minimaler Koppelfaktor zwischen einer Spule der Chipkarte und einer Spule des Terminals nötig. Der Koppelfaktor hängt von der Größe der Terminalspule, der Entfernung der Karte von dieser, der relativen Lage zu dieser und der Größe der Spule in der Karte ab. Je größer die Spule in der Karte ist, um so größer ist in der Regel der Koppelfaktor. Es besteht deshalb in der Regel der Wunsch, die Spule in der Karte so groß wie möglich zu gestalten. Die Spule muß jedoch an dem Chip in der Chipkarte elektrisch angeschlossen sein. Eine großflächige Spule führt dabei zu technisch aufwendigen Montage-Lösungen, vor allem aber zu einer schwierigen Handhabbarkeit beim Transport. Es wäre wesentlich einfacher, kleine Spulen, die etwa so groß sind wie die herkömmlichen Kontakt-Module der kontaktbehafteten Chipkarten, herzustellen und zu handhaben. Dabei wäre aber der Koppelfaktor bei gegebener Entfernung wesentlich kleiner beziehungsweise für den gleichen Koppelfaktor wäre die Reichweite wesentlich reduziert.

Aus der NL 9100347 ist eine kontaktlose Chipkarte bekannt, die einen Halbleiterchip, der mit einer ersten zumindest eine Windung aufweisenden Leiterschleife, deren Querschnittsfläche etwa die Abmessungen des Halbleiterchips aufweist, verbunden ist, aufweist. Außerdem weist die Datenträgeranordnung zumindest eine zweite zumindest eine Windung aufweisende Leiterschleife auf, deren Querschnittsfläche etwa die Abmessungen der Datenträgeranordnung hat und die einen Bereich aufweist, der eine dritte Schleife mit etwa der Abmessung der ersten Leiterschleife bildet. Die erste und die zweite Leiterschleife sind über die dritte Leiterschleife induktiv miteinander verkoppelt.

Allerdings sind dort die erste und die dritte Leiterschleife über ein magnetisches Joch miteinander verbunden, was eine aufwendige und damit teure Montage des Halbleiterchips in der Karte mit sich bringt.

Die Aufgabe vorliegender Erfindung ist es somit, eine tragbare Datenträgeranordnung, insbesondere eine Chipkarte, anzugeben, bei der diese Nachteile vermieden werden.

Die Aufgabe wird durch eine tragbare Datenträgeranordnung gemäß dem Anspruch 1 gelöst. Vorteilhafte Weiterbildungen sind in den Unteransprüchen angegeben.

Bei der erfindungsgemäßen Datenträgeranordnung hat die große Spule einen großen Koppelfaktor zur Terminalspule. In ihr werden deshalb Ströme induziert, die über die lokale induktive Kopplung in der kleinen Spule Ströme induzieren können. Die kleine Spule kann von einem Chip- beziehungsweise Modulhersteller leicht hergestellt und in ein Trägermodul integriert werden. In besonders vorteilhafter Weise ist die Spule bereits auf dem Halbleiterchip, beispielsweise durch dort aufgebrachte Aluminiumbahnen, realisiert.

Die große Spule kann von Kartenherstellern in einfacher Weise auf der oder in die Karte integriert werden. Sie kann beispielsweise als planare Spule durch Drucktechniken hergestellt werden. Dadurch entfällt das Transportproblem, bei dem die große Spule deformiert werden kann und sich deshalb ihre Eigenschaften, insbesondere ihre Güte und Induktivität ändern können.

Wesentlich für einen guten Koppelfaktor zwischen der großen und der kleinen Spule der Datenträgeranordnung ist ein Bereich möglichst große Länge, in dem die Leitungen der Spulen in möglichst geringem Abstand zueinander verlaufen und dort cut induktiv koppeln. Dies erfolgt in erfindungsgemäßer Weise dadurch, daß die große Spule, also die zweite Leiterschleife, eine kleine Schleife bildet, die etwa die Abmessungen der kleinen Spule, also der ersten Leiterschleife, hat. Diese kleine Schleife kann dabei sowohl mit als auch ohne Überkreuzungen ausgebildet sein. Es ist aber auch möglich, den Koppelbereich der beiden Leiterschleifen, also der großen und der kleinen Spule, mäanderförmig auszubilden, um ihn möglichst lang zu gestalten.

Wenn beispielsweise der Eingangswiderstand des Halbleiterchips an das Terminal angepaßt werden muß, ist es in vorteilhafter Weise möglich, bei der kleinen und der großen Spule oder auch nur bei der kleinen Schleife der großen Spule unterschiedliche Windungszahlen vorzusehen, so daß eine Transformation stattfindet.

Die Ausführung der Koppelschleife kann aber auch in verschiedenen Variationen erfolgen, z. B. als Resonanzkreis bestehend aus einer Induktivität und einem Kondensator. Es können alle Varianten damit hergestellt werden: ein geschlossener Resonanzkreis eignet sich zur induktiven Kopplung an ein Terminal, ein offener Resonanzkreis zur kapazitiven Kopplung. Für höhere Frequenzen wird aus einer Koppelschleife eine Antenne. Es ist möglich, bewußt die Resonanz der Koppelschleife auszunutzen.

Die Erfindung soll nachfolgend anhand eines Ausführungsbeispiels mit Hilfe von Figuren näher erläutert werden. Dabei zeigen:
- Figur 1: in schematischer Darstellung den Chip und die Spulen einer ersten erfindungsgemäßen tragbaren Datenträgeranordnung,
- Figur 2: in schematischer Darstellung eine zweite Ausgestaltungsform der Spulen und
- Figur 3: in schematischer Weise eine mänderförmigen Verlauf des Koppelbereichs der Spulen.

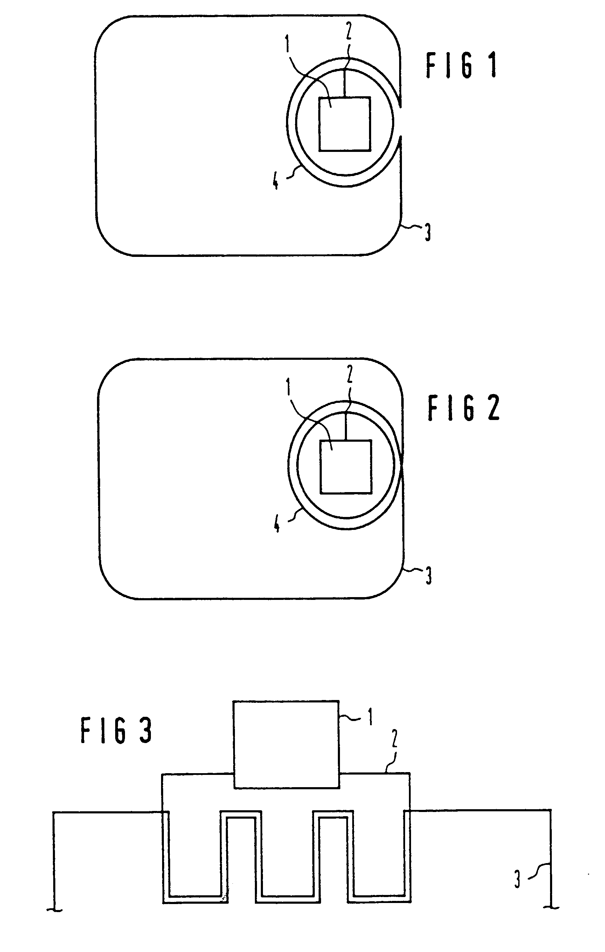

In den Figuren sind lediglich die Leiterschleifen beziehungsweise Spulen und der Halbleiterchip in schematischer Weise dargestellt. Die zweite Leiterschleife 2, also die kleine Spule, ist in der gewählten Darstellung immer um den Halbleiterchip 1 herum angeordnet, und kann beispielsweise auf einem nicht dargestellten Trägerelement, zusammen mit dem Halbleiterchip 1 angeordnet sein. Es ist jedoch auch möglich, die kleine Spule 2 direkt auf dem Halbleiterchip 1 zu realisieren, was die Handhabung noch einfacher machen würde. In den Figuren 1 und 2 ist verdeutlicht, daß die große Spule, also die zweite Leiterschleife 3, etwa die Abmessungen einer Chipkarte hat. Sie kann beispielsweise als planare Spule mittels Drucktechnik vom Kartenhersteller in oder auf der Chipkarte angeordnet werden. Die zweite Leiterschleife 3 bildet eine kleine Schleife 4, die in einem kleinen Abstand zur kleinen Spule 2 verläuft. Sie kann dabei innerhalb oder außerhalb als auch ober- oder unterhalb der kleinen Spule verlaufen. In Figur 1 ist eine überkreuzungsfreie Realisierung der kleinen Schleife 4 der großen Spule 3 dargestellt, während in Figur 2 die kleine Schleife 4 eine Überkreuzung aufweist. Hierbei wäre es möglich, bei der Schleife 4 mehr oder weniger Windungen als bei der großen Leiterschleife 3 vorzusehen. Bei einer erfindungsgemäßen Realisierung mit einer kleinen Spule 2 und einer großen Spule 3 ist es jederzeit möglich, bei den beiden Spulen 2, 3 unterschiedliche Windungszahlen vorzusehen, um somit eine Transformation beispielsweise für eine Impedanzanpassung zu ermöglichen.

Figur 3 zeigt eine weitere Möglichkeit der Ausgestaltung des koppelnden Bereichs zwischen einer mit einem Halbleiterchip 1 verbundenen kleinen Leiterschleife 2 und einer großen Leiterschleife 3. Hierbei weist der koppelnde Bereich einen mäanderförmigen Verlauf auf, um eine möglichst große Länge des koppelnden Bereichs zu erhalten.

Die Realisierung einer tragbaren Datenträgeranordnung mit einer ersten und einer zweiten Leiterschleife, die als kleine und große Spulen ausgebildet sind, ist nicht notwendigerweise an eine Kartenform gebunden. Eine solche erfindungsgemäße Ausgestaltung ist natürlich bei jeder Datenträgeranordnung, bei der diese größer als der Halbleiterchip ist, möglich.

## Patentansprüche

1. Datenträgeranordnung
mit einem Halbleiterchip (1), der mit einer ersten zumindest eine Windung aufweisenden Leiterschleife (2), deren Querschnittsfläche etwa die Abmessungen des Halbleiterchips (1) hat, verbunden ist,
mit zumindest einer zweiten wenigstens eine Windung aufweisenden Leiterschleife (3), deren Querschnittsfläche etwa die Abmessungen der Datenträgeranordnung hat und die einen Bereich aufweist, der eine dritte Schleife (4) mit etwa der Abmessung der ersten Leiterschleife (2) bildet,
wobei die erste und die zweite Leiterschleife (2, 3) über die dritte Schleife (4) induktiv miteinander verkoppelt sind,
**dadurch gekennzeichnet**,
daß die erste und die dritte Leiterschleife (2, 4) im wesentlichen konzentrisch angeordnet sind.

2. Datenträgeranordnung nach Anspruch 1,
**dadurch gekennzeichnet**,
daß die erste Leiterschleife (2) auf einem den Halbleiterchip (1) tragenden Trägerelement angeordnet ist.

3. Datenträgeranordnung nach Anspruch 1,
**dadurch gekennzeichnet**,
daß die erste Leiterschleife (2) auf dem Halbleiterchip (1) ausgebildet ist.

4. Datenträgeranordnung nach einem der vorangehenden Ansprüche, **dadurch gekennzeichnet**,
daß die erste und die zweite Leiterschleife (2, 3) unterschiedliche Windungszahlen haben.

5. Datenträgeranordnung nach einem der vorangehenden Ansprüche, **dadurch gekennzeichnet**,
daß die Induktivitäten der Leiterschleifen in Frequenzfiltern verwendet werden.

## Claims

1. Data carrier arrangement with a semiconductor chip (1), which is connected to a first conductor loop (2) which has at least one turn and whose cross-sectional surface area has approximately the dimensions of the semiconductor chip (1), with at least one second conductor loop (3), which has at least one turn and whose cross-sectional surface area has approximately the dimensions of the data carrier arrangement and which has a region which forms a third loop (4) having approximately the dimensions of the first conductor loop (2), the first and the second conductor loop (2, 3) being inductively coupled to each other via the third loop (4), charcterized in that the first and the third conductor loop (2, 4) are arranged essentially concentrically.

2. Data carrier arrangement according to Claim 1, characterized in that the first conductor loop (2) is arranged on a carrier element carrying the semiconductor chip (1).

3. Data carrier arrangement according to Claim 1, characterized in that the first conductor loop (2) is formed on the semiconductor chip (1).

4. Data carrier arrangement according to one of the preceding claims, characterized in that the first and the second conductor loop (2, 3) have different numbers of turns.

5. Data carrier arrangement according to one of the preceding claims, characterized in that the inductances of the conductor loops are used in frequency filters.

## Revendications

1. Dispositif de support de données comportant une puce (1) à semiconducteur qui est reliée à une première boucle (2) conductrice qui comporte au moins une spire et dont la surface de section transversale a à-peu-près les dimensions de la puce (1) à semiconducteur, comportant au moins une deuxième boucle (3) conductrice qui a au moins une spire, dont la surface de section transversale a à-peu-près les dimensions du dispositif de support de données et qui comporte une zone qui forme une troisième boucle (4) ayant à-peu-près la dimension de la première boucle (2) conductrice, les première et deuxième boucles (2,3) conductrices étant couplées l'une à l'autre de manière inductive par l'intermédiaire de la troisième boucle (4), caractérisé en ce que les première et troisième boucles (2,4) conductrices sont montées sensiblement concentriquement.

2. Dispositif de support de données suivant la revendication 1, caractérisé en ce que la première boucle (2) conductrice est montée sur un élément de support portant la puce (1) à semiconducteur.

3. Dispositif de support de données suivant la revendication 1, caractérisé en ce que la première boucle (2) conductrice est réalisée sur la puce (1) à semiconducteur.

4. Dispositif de support de données suivant l'une des revendications précédentes, caractérisé en ce que les première et deuxième boucles (2,3) conductrices ont des nombres de spires différents.

5. Dispositif de support de données suivant l'une des revendications précédentes, caractérisé en ce que les inductances des boucles conductrices sont utilisées dans des filtres de fréquence.
